# EUROPÄISCHE PATENTSCHRIFT

(11) **EP 2 694 261 B1**
(45) Veröffentlichungstag und Bekanntmachung des Hinweises auf die Patenterteilung: **18.11.2015**
(21) Anmeldenummer: 12714617.3
(22) Anmeldetag: 30.03.2012
(51) Int. Cl.: B28B 7/16, B28B 7/00

(54) **VORRICHTUNG ZUM VERBINDEN ZWEIER TEILE EINER NEGATIVFORM ZUR HERSTELLUNG VON SCHACHTBODENTEILEN AUS BETON**
DEVICE FOR CONNECTING TWO PARTS OF A FEMALE FORM FOR PRODUCING BOTTOM PARTS OF A SHAFT FROM CONCRETE
DISPOSITIF POUR RELIER DEUX PARTIES D'UN MOULE NÉGATIF POUR PRODUIRE DES PARTIES DE FOND DE PUITS EN BÉTON

(30) Priorität: 01.04.2011 DE 202011004704 U
(43) Veröffentlichungstag der Anmeldung: 12.02.2014
(73) Patentinhaber: BFS Betonfertigteilesysteme GmbH, 89143 Blaubeuren (DE)
(72) Erfinder: MÜLLER, Klaus, 89143 Blaubeuren-Gerhausen (DE)
(74) Vertreter: Weickmann & Weickmann
(86) Internationale Anmeldenummer: PCT/EP2012/055853
(87) Internationale Veröffentlichungsnummer: WO 2012/131060

(56) Entgegenhaltungen:
- DE-A1- 10 317 321
- DE-U1-202009 017 953
- US-A- 4 253 282
- US-A1- 2005 040 313

## Beschreibung

Die vorliegende Erfindung betrifft eine Vorrichtung zum Verbinden zweier Teile einer Negativform zur Herstellung von Schachtbodenteilen aus Beton sowie eine Negativform aus mindestens zwei Teilen, die mittels einer solchen Vorrichtung miteinander zu verbinden sind.

Schachtbodenteile bilden den unteren Abschluss eines mehrteiligen unterirdischen Schachts, über den ein Kanalisationssystem zur Inspektion bzw. Wartung zugänglich ist. In diesem Bodenbereich des Schachts weist der Schacht an seiner Seitenwand mindestens eine Einlassöffnung sowie eine Auslassöffnung zum Einlassen bzw. Abführen von Abwasser auf. Ferner ist im Schachtbodenteil eine Gerinnestruktur ausgebildet, welche die Einlass- und Auslassöffnungen miteinander verbindet. Je nach Anzahl und Anordnung der Einlass- und Auslassöffnungen kann die Gerinnestruktur verschiedene Gestaltungen aufweisen, verzweigt sein, ein bestimmtes Gefälle aufweisen oder verschiedene Durchflussquerschnitte bereitstellen.

Ein aus Beton zu fertigendes Schachtbodenteil für einen Schacht der oben genannten Art umfasst eine Schachtwandung, welche die Schachtwandung eines darüber anzuordnenden Schachtteils fortsetzt, sowie einen Bodenabschnitt, in welchem die Gerinnestruktur ausgebildet ist. Um mit geringem technischen Aufwand Schachtbodenteile mit unterschiedlichen Gerinnestrukturen sowie unterschiedlichen Anordnungen von Einlass- und Auslassöffnungen fertigen zu können, sind im Stand der Technik Verfahren und Vorrichtungen bekannt, in welchen die Form zum Formen der Schachtbodenteile aus einer Basisform, einer Gerinnenegativform sowie mindestens einem Aussparkern zusammengesetzt ist, wobei die Basisform die Schachtwandung abbildet, die Gerinnenegativform die Gerinnestruktur im Bodenbereich des Schachtbodenteils abbildet und der mindestens eine Aussparkern die Einlass- bzw. Auslassöffnung abbildet.

Vor dem Formen des Betons muss die Form aus den genannten Elementen zusammengesetzt werden. Während die Gerinnenegativform relativ stabil auf einem Formkern der Basisform aufliegt und somit zum großen Teil durch ihr eigenes Gewicht gehalten wird, ist der Aussparkern an einer Seitenfläche der Gerinnenegativform zu befestigen, was mit größerem Aufwand verbunden ist, zumal etwaige Befestigungsmittel nicht die äußere Kontur des Aussparkerns bzw. der Gerinnenegativform verändern sollen, damit die Befestigungsmittel nicht im Schachtbodenteil abgebildet werden. Zudem kommt es an der Stoßstelle zwischen Aussparkern und Gerinnenegativform zu unerwünschten Fugen, die die Qualität des fertigen Schachtbodenteils beeinträchtigen.

Ferner ist es bei herkömmlichen Formen für Schachtbodenteile oft problematisch, die Befestigung zwischen dem Aussparkern und der Gerinnenegativform zum Entschalen des Schachtbodenteils wieder zu lösen und den Aussparkern aus dem zumindest teilweise verfestigten Beton des Schachtbodenteils herauszuziehen. Nicht selten ist zum vollständigen Entschalen eine Zerstörung des Aussparkerns oder/und der Gerinnenegativform unvermeidlich.

Eine gattungsgemäße Vorrichtung und ein gattungsgemäßes Verfahren sind bzw. aus der US 4 253 282 und der JP 58 81111 bereits bekannt.

Vor diesem Hintergrund ist es Aufgabe der vorliegenden Erfindung, eine Vorrichtung zum Verbinden zweier Teile einer Negativform zur Herstellung von Schachtbodenteilen aus Beton bereitzustellen, mit welcher die beiden Teile der Negativform, z.B. ein Aussparkern und eine Gerinnenegativform, einfach und zuverlässig miteinander verbunden werden können und mit welcher diese Verbindung zum Entschalen des Schachtbodenteils ebenfalls einfach wieder gelöst werden kann. Aufgabe der Erfindung ist es ferner, eine Negativform aus einem ersten Teil und einem zweiten Teil und einer Vorrichtung zum Verbinden der beiden Teile anzugeben, welche eine einfache Verbindung bzw. Trennung der beiden Teile erlaubt.

Nach einem ersten Aspekt der Erfindung wird zur Lösung dieser Aufgabe eine Vorrichtung nach Anspruch 1 vorgeschlagen,

Nach einem wichtigen Merkmal der Erfindung ist somit ein Positionierelement vorgesehen, welches dafür eingerichtet ist, den ersten Teil der Negativform zu halten und gleichzeitig mittels eines Positioniervorsprungs am zweiten Teil der Negativform angeheftet zu werden, so dass der erste Teil der Negativform zunächst provisorisch an dem zweiten Teil der Negativform gehalten werden kann. Das erste Teil ist dann in seiner Sollposition am zweiten Teil fixiert und kann dann in einem zweiten Arbeitsschritt mittels der Befestigungsschraube stabil am zweiten Teil befestigt werden. Durch die Schraubwirkung der Befestigungsschraube werden die beiden Teile der Negativform ferner zuverlässig miteinander verpresst, so dass Fugen zwischen den Teilen geschlossen werden und ein qualitativ hochwertiges Schachtbodenteil geformt werden kann.

Eine Vorrichtung der Erfindung eignet sich insbesondere zur Verbindung zweier Teile einer Negativform, welche aus geschäumten Kunststoffmaterial oder einem Werkstoff mit vergleichbaren mechanischen Eigenschaften gebildet sind. Das Positionierelement kann dann schnell und einfach, insbesondere auch per Hand, mit seinem Positioniervorsprung in das zweite Teil der Negativform eingedrückt werden oder mit wenigen Hammerschlägen am zweiten Teil der Negativform angeheftet werden. Darüber hinaus kann in derartige Materialien die Befestigungsschraube zumeist ohne Vorbohrung unmittelbar eingedreht werden, so dass der gesamte Vorgang zum Verbinden der beiden Teile schnell und einfach durchführbar ist.

Vorzugsweise ist das Positionierelement verschiebbar an dem ersten Teil der Negativform gehalten, so dass es zu dem zweiten Teil der Negativform hin oder von diesem weg bewegbar ist. Der Abstand zwischen dem ersten Teil der Negativform und dem zweiten Teil der Negativform, d.h. ein Spalt zwischen den beiden Teilen, hängt dann nicht davon ab, wie weit der Positioniervorsprung in das zweite Teil der Negativform eingedrungen ist. Mit andern Worten genügt ein teilweises Eindringen des Positioniervorsprungs mit geringerem Kraftaufwand und das erste Teil der Negativform kann dennoch in seiner korrekten Position dicht am zweiten Teil der Negativform provisorisch fixiert werden, um anschließend die stabile Verbindung mit der Befestigungsschraube herstellen zu können.

Die Befestigungsschraube ist direkt oder indirekt kraftübertragend mit dem Positionierelement gekoppelt, so dass eine Bewegung der Befestigungsschraube, insbesondere beim Eindrehen der Befestigungsschraube, auch zu einer Kraftübertragung auf das Positionierelement führt. Somit kann insbesondere erreicht werden, dass beim Eindrehen der Befestigungsschraube das Positionierelement weiter zu dem zweiten Teil der Negativform hin gedrückt wird und die Positioniervorsprünge weiter in das zweite Teil der Negativform eindringen, so dass die Verbindung zwischen den Teilen der Negativform nach dem Einschrauben der Befestigungsschraube noch stabiler und insbesondere auch drehfest sein kann.

Bei einer indirekten Kraftübertragung zwischen Befestigungsschraube und Positionierelement kann die Befestigungsschraube Kraft auf ein weiteres Bauteil übertragen, welches diese Kraft wiederum an das Positionierelement weitergibt. Dieses zusätzliche Bauteil ist durch eine Hülse gebildet, durch welche die Befestigungsschraube hindurchgeführt ist, wobei die Befestigungsschraube in Eingriff mit der Hülse gebracht oder bringbar ist und die Hülse wiederum in Eingriff mit dem Positionierelement gebracht oder bringbar ist. Eine solche Hülse erlaubt eine um die Schraubenachse gleich verteilte Übertragung der Kraft von der Befestigungsschraube auf das Positionierelement, so dass die Befestigungsschraube in dem ersten Teil der Negativform geführt und gegen ein Verkanten gesichert ist. Insbesondere weist die Befestigungsschraube vorzugsweise einen Anschlag zur Anlage an einem Anschlag der Hülse auf, um die Hülse bei einer Bewegung zum zweiten Teil der Negativform hin mitzunehmen. Durch die Verwendung solcher Anschläge kann erreicht werden, dass die Befestigungsschraube die Hülse erst dann in Richtung des zweiten Teils der Negativform mitnimmt, wenn die Befestigungsschraube einen gewissen Betrag in das zweite Teil der Negativform eingeschraubt ist und das Gewinde der Befestigungsschraube im zweiten Teil greift.

Weist die Vorrichtung eine Hülse der oben beschriebenen Art auf, so kann die Hülse ferner einen Anschlag, insbesondere in Form eines Außenflansches, zur Anlage an einem Anschlag des ersten Teils der Negativform aufweisen, um den ersten Teil der Negativform bei einer Bewegung der Hülse zum zweiten Teil der Negativform hin mitzunehmen. Ein solcher Anschlag ermöglicht eine formschlüssige Kraftübertragung von der Hülse auf die Negativform, so dass insbesondere bei einer aus geschäumten Kunststoffmaterial gebildeten Negativform auch höhere Kräfte ohne Beschädigung des ersten Teils der Negativform übertragen werden können.

Erfindungsgemäße weist die Hülse ferner einen Anschlag zur Anlage an einem Anschlag des Positionierelements auf, um das Positionierelement bei einer Bewegung zum zweiten Teil der Negativform hin mitzunehmen. Auf diese Weise wird eine gewisse Toleranz für die Eindringtiefe des Positioniervorsprungs des Positionierelements in das zweite Teil der Negativform zugelassen, indem in dem provisorisch angehefteten Zustand ein gewisser Abstand zwischen der Hülse und dem Positionierelement bleibt. Erst beim Einschrauben der Befestigungsschraube nähert sich die Hülse dem Positionierelement an bis der Anschlag der Hülse am Anschlag des Positionierelements anschlägt und die Hülse das Positionierelement weiter zu dem zweiten Teil der Negativform hin drückt.

In einer weiteren Ausführungsform der vorliegenden Erfindung ermöglicht die Vorrichtung nicht nur ein einfaches und sicheres Befestigen der beiden Teile der Negativform aneinander sondern erleichtert zudem auch das Abziehen des ersten Teils der Negativform von dem zweiten Teil der Negativform bzw. von einem zu entschalenden Schachtbodenteil. Dazu kann das Positionierelement einen Anschlag zur Anlage an einem Anschlag des ersten Teils der Negativform aufweisen, um das erste Teil der Negativform von dem zweiten Teil der Negativform bzw. von einem Schachtbodenteil abzuziehen. Wird das Positionierelement demnach, beispielsweise durch ein geeignetes Werkzeug, in einer von dem zweiten Teil der Negativform weg weisenden Richtung bewegt, so überträgt das Positionierelement formschlüssig diese Kraft auf das erste Teil der Negativform, so dass auch große Kräfte sicher in das erste Teil der Negativform eingeleitet werden können, ohne das Teil zu beschädigen oder gar zu zerstören. Damit können auch Negativformen aus weicheren Materialien, insbesondere geschäumtem Kunststoffmaterial, zuverlässig entschalt werden und stehen für die Mehrfachverwendung zur Verfügung.

Das vorstehend beschriebene, ein Entschalen der Negativform erleichternde Positionierelement weist vorzugsweise ferner ein Kopplungsmittel zur Kopplung mit einem Ziehwerkzeug auf, um das Positionierelement in einer Richtung von dem zweiten Teil der Negativform weg (bzw. aus dem Schachtbodenteil heraus) zu ziehen. Für eine besonders einfache und gleichzeitig sichere formschlüssige Kopplung kann eine Bayonett-Kopplung verwendet werden, in welcher die Kopplungsmittel des Positionierelements so ausgebildet sind, dass ein Ziehwerkzeug in eine Öffnung der Kopplungsmittel eingeführt und um einen bestimmten Winkel verdreht werden kann, bis es einen Abschnitt des Kopplungsmittels hintergreift. Wird das Ziehwerkzeug anschließend zurückgezogen, so nimmt es das Positionierelement in Zugrichtung mit, so dass das erste Teil der Negativform abgezogen wird.

In einer konstruktiv besonders einfachen Variante der Vorrichtung des ersten Aspekts kann das Positionierelement im Wesentlichen durch eine mit dem Positioniervorsprung versehene Platte gebildet sein. Die Platte kann dann eine zentrale Durchgangsöffnung aufweisen, durch welche die Befestigungsschraube hindurchgeführt ist und außerhalb welcher beispielsweise die Hülse kraftübertragend zur Anlage kommen kann. Gleichzeitig kann ein äußerer Randabschnitt der Platte formschlüssig an einer entsprechenden Anlagefläche des ersten Teils der Negativform anliegen, um eine Kraftübertragung beim Abziehen des ersten Teils der Negativform vom zweiten Teil der Negativform bzw. von einem Schachtbodenteil zu ermöglichen.

Nach einem zweiten Aspekt der vorliegenden Erfindung wird die oben angegebene Aufgabe gelöst durch eine Negativform zur Herstellung von Schachtbodenteilen aus Beton, umfassend ein erstes Teil, ein zweites Teil und eine Vorrichtung gemäß dem ersten Aspekt der Erfindung zum Verbinden des ersten Teils mit dem zweiten Teil, wobei das erste Teil eine Durchgangsöffnung aufweist, durch welche die Befestigungsschraube hindurchgeführt oder hindurchführbar ist. Eine solche Negativform des zweiten Aspekts der Erfindung kann in der vorstehend im Zusammenhang mit dem ersten Aspekt der Erfindung beschriebenen Weise einfach und zuverlässig gekoppelt bzw. getrennt werden, indem die beiden Teile zunächst provisorisch aneinander geheftet werden und anschließend mittels der Befestigungsschraube miteinander verbunden werden. Zusätzlich erlaubt die Durchgangsöffnung des ersten Teils, dass die Befestigungsschraube von einer dem zweiten Teil abgewandten Seite des ersten Teils aus zugänglich ist, so dass die Befestigung bzw. das Lösen des ersten Teils bequem von außen möglich ist.

Vorzugsweise ist die Durchgangsöffnung des ersten Teils der Negativform an einem dem zweiten Teil zugewandten Ende radial erweitert, wobei das Positionierelement in das radial erweiterte Ende passend eingesetzt ist, so dass es nicht durch die Durchgangsöffnung hindurch treten kann. An dem Übergang zwischen dem radial erweiterten Ende der Durchgangsöffnung und dem schmaleren Abschnitt der Durchgangsöffnung ist dann ein Anschlag bzw. Anlageabschnitt für das Positionierelement gebildet, an welchem das Positionierelement beim Abziehen des ersten Teils der Negativform von dem zweiten Teil der Negativform bzw. von einem zu entschalenden Schachtbodenteil formschlüssig anliegen kann, um auch hohe Kräfte ohne Beschädigung des ersten Teils der Negativform übertragen zu können. Die Negativform des zweiten Aspekts der Erfindung kann auf diese Weise zuverlässig entschalt werden.

Die oben im Zusammenhang mit dem ersten Aspekt der Erfindung sowie mit dem zweiten Aspekt der Erfindung aufgezeigten Wirkungen und Vorteile kommen besonders zum Tragen, wenn das erste Teil der Negativform ein Aussparkern ist, welcher eine Ein- oder Auslassöffnung des Schachtbodenteils abbildet, und das zweite Teil eine Gerinnenegativform ist, welche eine Gerinnestruktur des Schachtbodenteils abbildet. Aussparkern und Gerinnestruktur sind üblicherweise durch separate Teile herzustellen, da ein Entschalen ansonsten aus geometrischen Gründen überhaupt nicht ohne Zerstörung der Negativform möglich wäre, so dass zwischen diesen Teilen der Negativform eine einfache und gleichzeitig zuverlässige Kopplung von besonderem Interesse ist. Zudem ist ein Entschalen der Aussparkerne aufgrund ihrer annähernd zylindrischen Form oft schwierig, da diese vollumfänglich von Beton umgeben sind.

Die vorliegende Erfindung stellt nach einem dritten Aspekt ferner ein Verfahren zum Herstellen von Schachtbodenteilen aus gemäß Anspruch 13 bereit,

In einer Ausführungsform des erfindungsgemäßen Verfahren des dritten Aspekts umfasst das Verfahren ferner einen Schritt des Entschalens des Schachtbodenteils, wobei von einem Werkzeug eine Kraft auf das Positionierelement übertragen wird und wobei das Positionierelement diese Kraft auf das erste Teil der Negativform überträgt, um das erste Teil der Negativform von dem zweiten Teil der Negativform bzw. von dem Schachtbodenteil zu trennen.

Die Erfindung wird nachfolgend anhand eines bevorzugten Ausführungsbeispiels unter Bezugnahme auf die beigefügten Zeichnungen näher erläutert. Es zeigen:
- Figur 1: eine Querschnittsansicht einer Form zur Herstellung von Schachtbodenteilen gemäß einem Ausführungsbeispiel der vorliegenden Erfindung,
- Figur 2: eine perspektivische Ansicht einer Gerinnenegativform der in Figur 1 gezeigten Form,
- Figur 3: eine Draufsicht eines Aussparkerns der in Figur 1 gezeigten Form,
- Figur 4: eine Schnittansicht des in Figur 3 gezeigten Aussparkerns sowie einer Vorrichtung zum Verbinden des Aussparkerns mit der Gerinnenegativform gemäß einem Ausführungsbeispiel der vorliegenden Erfindung,
- Figur 5: eine perspektivische Schnittansicht der in Figur 4 gezeigten Bauteile,
- Figur 6: eine Seitenansicht eines Ziehwerkzeugs zum Entschalen des in Figur 3 gezeigten Aussparkerns, und
- Figur 7: eine Vorderansicht des in Figur 6 gezeigten Ziehwerkzeugs.

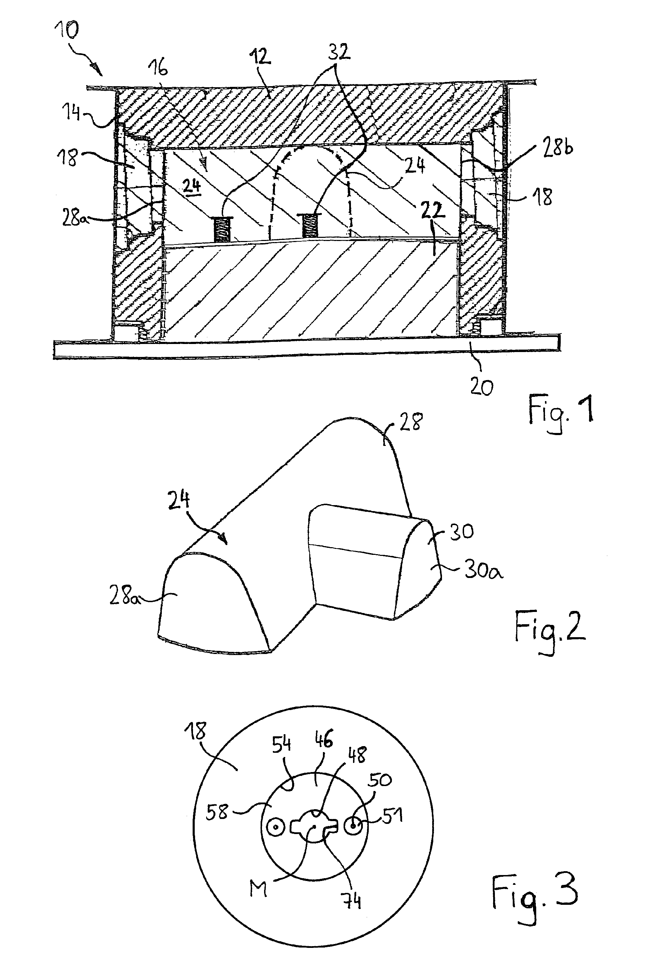

Unter Bezugnahme auf Figuren 1 bis 5 werden nachfolgend Ausführungsbeispiele für eine Form zur Herstellung von Schachtbodenteilen sowie eine Vorrichtung zum Verbinden von Teilen einer solchen Form erläutert.

Eine in Figur 1 gezeigte Vorrichtung 10 zur Herstellung von Schachtbodenteilen 12 aus Beton im Gießverfahren umfasst einen Formmantel 14 zum Formen einer Außenwandung des Schachtbodenteils 12, eine innere Negativform 16 zum Formen der Innenwandung und des Gerinneabschnitts des Schachtbodenteils 12 sowie Aussparkerne 18 zum Formen der Ein- und Auslässe des Schachtbodenteils 12. Ein Schachtbodenteil 12 wird in dem Hohlraum geformt, der zwischen dem Formmantel 14 und der inneren Negativform 16 bzw. den Aussparkernen 18 gebildet ist.

Der Formmantel 14 kann eine zylinderförmige Wandung umfassen und auf einer Grundplatte 20 stehen, auf welcher auch die innere Negativform 16 steht. Die innere Negativform 16 kann aus einem auf der Grundplatte 20 stehenden Formkern 22 und einer auf dem Formkern 22 aufgesetzten Gerinnenegativform 24 zusammengesetzt sein, wobei der Formkern 22 eine Innenwandung, insbesondere zylindrische Innenwandung, des Schachtbodenteils 12 formen kann und die Gerinnenegativform 24 einen Gerinneabschnitt am Boden des Schachtbodenteils 12 zur Verbindung der Ein- und Auslässe formen kann.

Bei der Herstellung von Schachtbodenteilen besteht oft der Bedarf, verschiedene Typen von Schachtbodenteilen herzustellen, welche im Wesentlichen gleiche Außenabmessungen und gleichen Schachtdurchmesser aufweisen, jedoch andere Gerinnestrukturen haben, die sich in der Anzahl der Ein- bzw. Auslässe und in der Gestaltung der Verbindungen zwischen den Ein- und Auslässen (insbesondere Neigung, Strömungsquerschnitt) voneinander unterscheiden. Es wird daher bevorzugt das Konzept verfolgt, den Formmantel 14 und den Formkern 22 der inneren Negativform 16 aus sehr robusten und für den Dauerbetrieb eingerichteten Bauteilen, beispielsweise aus Stahl, herzustellen und die Aussparkerne 18 sowie die Gerinnenegativform 24 aus leicht maschinell zu bearbeitenden oder/und kostengünstigeren Materialien zu fertigen, da diese Teile individuell für eine gewünschte Gerinnestruktur bereitzustellen sind und somit in größerer Stückzahl vorzuhalten sind. Als Materialien für die Gerinnenegativform 24 bzw. die Aussparkerne 18 kommt beispielsweise Styropor in Frage, wie im Folgenden stellvertretend für eine Reihe anderer, leicht zu bearbeitender bzw. kostengünstiger Materialien angenommen wird.

Die in Figuren 2 und 3 dargestellten Bauteile, Gerinnenegativform 24 bzw. Aussparkern 18, können aus einem beispielsweise zylinderblockförmigen Styropor-Rohkörper (nicht dargestellt) durch eine formgebende Materialbearbeitung hergestellt sein. Insbesondere kann die gewünschte Geometrie bzw. Oberflächenkontur eines automatisierten Fräswerkzeugs aus dem Rohkörper heraus gefräst werden, etwa unter Verwendung eines Roboters, der von einer elektronischen Steuereinheit nach Maßgabe eines virtuellen dreidimensionalen Modells der Gerinnestruktur bzw. der Ein- und Auslassöffnungen angesteuert wird.

Im Ausführungsbeispiel der Figur 2 umfasst die Gerinnenegativform 24 einen Hauptgerinneabschnitt 28 zur Bildung eines Hauptgerinneastes der späteren Gerinnestruktur des Schachtbodenteils sowie einen integral mit dem Hauptgerinneabschnitt 28 verbundenen Nebengerinneabschnitt 30 zur Bildung eines Nebengerinneastes der Gerinnestruktur. Zur Abbildung der Einlassöffnungen bzw. Auslassöffnungen sind jeweils an gegenüberliegenden Seitenflächen 28a, 28b des Hauptgerinneabschnitts 28 sowie an einer Seitenfläche 30a des Nebengerinneabschnitts 30 jeweils ein Aussparkern 18 anzufügen.

Während die Gerinnenegativform 24 beim Zusammensetzen der Form 10 einfach auf den Formkern 22 aufgesetzt werden kann und somit bereits durch ihre eigene Gewichtskraft, gegebenenfalls unterstützt durch Schraubverbindungen 32, in Position gehalten wird, sind die Aussparkerne 18 freitragend an den Seitenflächen 28a, 28b, 30a zu befestigen. Für die Befestigung der Aussparkerne 18 an der Gerinnenegativform 24 kommt eine Verbindungsvorrichtung 34 gemäß einem Ausführungsbeispiel der vorliegenden Erfindung zum Einsatz, welche im Folgenden insbesondere unter Bezugnahme auf Figuren 3 bis 5 näher erläutert wird.

Zum Einsatz der Verbindungsvorrichtung 34 ist in den Aussparkern 18 eine Durchgangsbohrung 36 entlang einer Hauptachse M eingebracht, welche bei einem im Wesentlichen zylinderförmigen Aussparkern mit der Zylinderachse oder Mittelachse des Aussparkerns 18 zusammenfällt.

Die Verbindungsvorrichtung 34 umfasst eine Befestigungsschraube 38, welche in die Durchgangsöffnung 36 einführbar ist und an ihrem einen Ende ein Gewinde 40 und an ihrem anderen Ende einen Schraubenkopf 42 aufweist. Das Gewinde 40 ist an das Material der Gerinnenegativform 24 angepasst und vorzugsweise ein Gewinde mit relativ großer Ganghöhe, welches ohne Vorbohren in ein geschäumtes Kunststoffmaterial (Styropor) eingeschraubt werden kann. Der Schraubenkopf 42 weist einen Werkzeugeingriffsabschnitt 44, z.B. einen Sechskantkopf, auf, so dass die Befestigungsschraube 38 mittels eines geeigneten Werkzeugs, insbesondere mit einem hydraulischen oder elektrischen Schrauber, eingedreht werden kann.

Die Verbindungsvorrichtung 34 umfasst ferner eine Positionierplatte 46, welche orthogonal zur Hauptachse M anzuordnen ist und eine zentrale Durchgangsöffnung 48 zur Durchführung der Befestigungsschraube 38 aufweist. Die Positionierplatte 46 trägt mindestens einen Positioniervorsprung 50, vorzugsweise eine Mehrzahl von gleichmäßig um die Hauptachse M verteilten Positioniervorsprüngen (hier zwei diametral gegenüberliegende Positioniervorsprünge 50). Die Positioniervorsprünge erstrecken sich parallel zur Hauptachse M und sind an ihrem einen Ende fest mit der Positionierplatte 46 verbunden, während sie an ihrem anderen Ende eine Spitze 52 aufweisen, die dazu eingerichtet ist, in das Material der Gerinnenegativform 24 einzudringen. Die Positionierplatte 46 und die Positioniervorsprünge 50 können aus Metall oder einem festen Kunststoffmaterial gebildet sein.

An der Positionierplatte 46 ist ferner mindestens ein Abstandshalter 51 angeordnet, der dafür sorgt, dass auch dann, wenn die Positioniervorsprünge 50 vollständig in die Gerinnenegativform 24 eingedrungen sind, ein bestimmter Abstand zwischen der Positionierplatte 46 und der Seitenfläche 28a, 28b, 30a der Gerinnenegativform 24 verbleibt, der in einer später zu beschreibenden Weise ein Abziehen der Positionierplatte 46 zum Entschalen des Aussparkerns 18 unterstützt. Im Ausführungsbeispiel sind zwei Abstandshalter 51 vorgesehen, die jeweils einen verbreiterten Fußabschnitt der Positioniervorsprünge 50 bilden.

An einem der Gerinnenegativform 24 zugewandten Endabschnitt weist die Durchgangsbohrung 36 eine Aussparung 54 auf, so dass an diesem Ende die Durchgangsbohrung 36 gegenüber einem inneren Abschnitt 56 der Durchgangsbohrung 36 radial erweitert ist. In die Aussparung 54 ist die Positionierplatte 46 so eingesetzt, dass die Positionierplatte 46 entlang der Hauptachse M verschiebbar gehalten ist und soweit in das Innere des Aussparkerns 18 eingeschoben werden kann, bis ein äußerer Randabschnitt 58 der Positionierplatte 46 an einer Stufe 60 zwischen der Aussparung 54 und dem inneren Abschnitt 56 der Durchgangsöffnung 36 zur Anlage kommt. Die Verbindungsvorrichtung 34 umfasst im Ausführungsbeispiel ferner eine Hülse 62 von im Wesentlichen zylinderartiger Form, deren Zylinderachse mit der Hauptachse M zusammenfällt. Die Befestigungsschraube 38 kann durch die Hülse 62 hindurchgesteckt werden. Im Ausführungsbeispiel ist die Befestigungsschraube 38 verliersicher in der Hülse 62 gehalten, indem ein Schaftabschnitt 38a der Befestigungsschraube 38, der einen kleineren Durchmesser aufweist als der Kopfabschnitt 42 und das Gewinde 40, passend in einem verengten Halsabschnitt 62a der Hülse geführt ist. Die Hülse 62 kann aus Kunststoff, Metall oder einem anderen geeigneten Material gebildet sein.

Ein Hauptabschnitt 64 der Hülse weist Außenabmessungen auf, der ein Einführen der Hülse 62 in den inneren Abschnitt 56 der Durchgangsöffnung 36 ermöglicht. An den Hauptabschnitt 64 schließt sich an einem der Gerinnenegativform 24 abgewandten Ende der Hülse 62 ein umlaufender Außenflansch 66 an, der solche Abmessungen aufweist, dass er nicht in den inneren Abschnitt 56 der Durchgangsöffnung 36 eingeschoben werden kann. Der Aussparkern 18 bildet am Übergang zum inneren Abschnitt 56 der Durchgangsöffnung 36 eine Stufe 68 an welcher der Außenflansch 66 formschlüssig zur Anlage kommt.

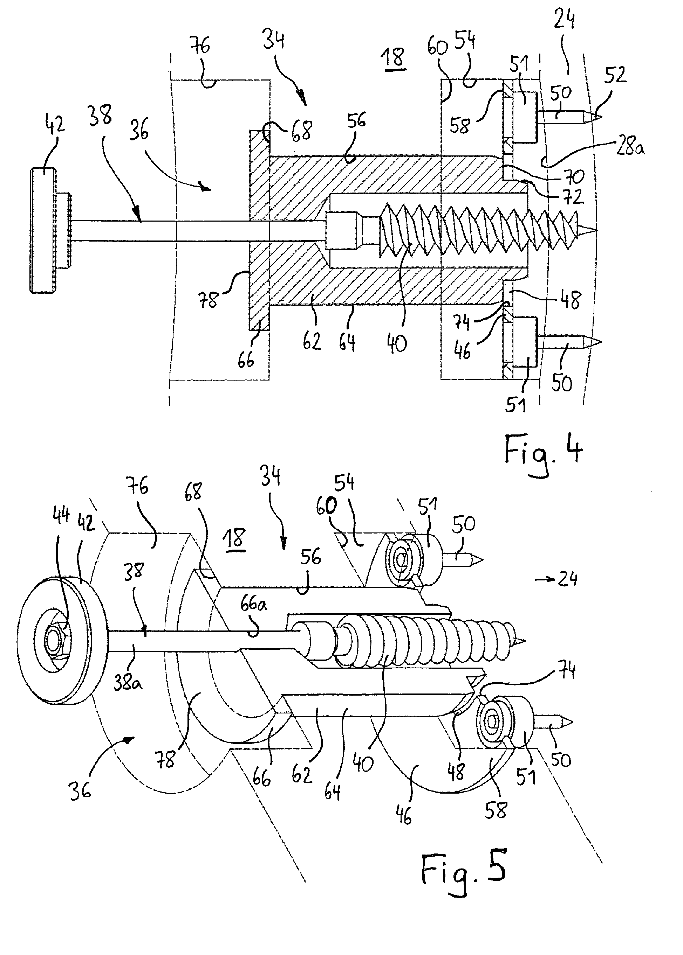

An ihrem der Gerinnenegativform 24 zugewandten Ende bildet eine Stirnfläche 70 einen Anschlag zur Anlage an einem Rand der zentralen Durchgangsöffnung 48, so dass die Stirnfläche 70 der Hülse 62 nicht durch die Positionierplatte 46 hindurchtreten kann. Gewünschtenfalls kann über die Stirnfläche 70 jedoch ein Zentriervorsprung 72 der Hülse 62 in Richtung zur Gerinnenegativform 24 hin vorstehen, welcher kleineren Durchmesser aufweist als der Hauptabschnitt 64 der Hülse 62 und in die zentrale Durchgangsöffnung 48 der Positionierplatte 46 eingeführt werden kann. Der Zentriervorsprung 72 kann insbesondere zu seinem freien Ende hin verjüngt sein, so dass beim Heranführen der Hülse 62 an die Positionierplatte 46 der Zentriervorsprung 42 die zentrale Durchgangsöffnung 48 leicht findet. Ferner kann die zentrale Durchgangsöffnung, wie im Ausführungsbeispiel gemäß Figuren 3 und 5 illustriert, in Bezug auf die Hauptachse M diametral gegenüberliegende Aussparungen 74 aufweisen, an welchen die Durchgangsöffnung 48 radial erweitert ist. Da die Aussparungen 74 nur an einem Teil des Umfangs der Durchgangsöffnung 48 vorgesehen sind, wird die Hülse 62 an ihrer umlaufender Stirnfläche 70 weiterhin zuverlässig durch die übrigen, nicht ausgesparten Randabschnitte der Durchgangsöffnung 48 abgestützt.

Nachfolgend wird ein Betrieb der erfindungsgemäßen Verbindungsvorrichtung 34 bzw. ein Betrieb der Form 10 zum Formen und Entschalen eines Schachtbodenteils 12 erläutert.

Ein Aussparkern 18, der zur Befestigung an der Gerinnenegativform 24 durch eine Verbindungsvorrichtung 34 der erfindungsgemäßen Art vorbereitet ist, kann mit der Durchgangsöffnung 36 versehen werden, indem ein entsprechendes Bohrwerkzeug mit einem Durchmesser entsprechend dem inneren Abschnitt 56 der Durchgangsöffnung 36 durch den Aussparkern 18 geführt wird. Ferner wird auf einer der Gerinnenegativform 24 zugewandten Seite der Durchgangsbohrung 36 die Aussparung 54 mit größerem Durchmesser eingebracht. Zusätzlich kann auf der der Gerinnenegativform 24 abgewandten Seite eine weitere Aussparung 76 mit größerem Durchmesser als dem Durchmesser des inneren Abschnitts 56 eingebracht werden, so dass auch der Außenflansch 66 der Hülse 62 sowie der Schraubenkopf 42 der Befestigungsschraube 38 in dem Aussparkern 18 versenkt angeordnet werden können.

Anschließend wird die Positionierplatte 46 in die Aussparung 54 eingesetzt und zurückgeschoben, bis sie an der Stufe 60 anliegt. Die Aussparung 54 weist eine solche Tiefe auf, dass die Spitzen 52 der Positioniervorsprünge 50 dann nicht mehr oder nur einen geringfügigen Betrag aus der Aussparung 54 hervorstehen, so dass die Justierung der Position des Aussparkerns 18 an der Gerinnenegativform 24 zunächst durch die Positioniervorsprünge 50 nicht behindert wird. Die Bedienperson bzw. ein Roboter kann dann den Aussparkern 18 in der gewünschten Position an einer der Seitenflächen 28a, 28b, 30a der Gerinnenegativform 24 ansetzen und genau positionieren.

Anschließend wird von der der Gerinnenegativform 24 abgewandten Seite her die Hülse 62 mit Befestigungsschraube 38 in die Durchgangsöffnung 36 eingeführt und vorgeschoben, bis die Stirnfläche 70 der Hülse 62 an dem Rand der zentralen Durchgangsöffnung 48 der Positionierplatte 46 anstößt. Wird die Hülse 62 dann weiter zur Gerinnenegativform 24 hin gedrückt, so nimmt sie die Positionierplatte 46 mit und die Positioniervorsprünge 50 werden in das Material der Gerinnenegativform 24 eingedrückt. Durch die angespitzten Positioniervorsprünge 50 kann dieser Vorgang mit geringem Kraftaufwand durchgeführt werden. Das Vorschieben der Hülse 62 kann durch Hammerschläge gegen ein der Gerinnenegativform 24 abgewandtes Ende der Hülse 62 unterstützt werden.

Die Bewegung der Hülse 62 zur Gerinnenegativform 24 hin ist beendet, wenn der Außenflansch 66 der Hülse 62 an der Stufe 68 des Aussparkerns 18 anschlägt oder/und wenn die Positioniervorsprünge 50 so weit in die Gerinnenegativform 24 eingedrückt sind, dass die Abstandshalter 51 an der Seitenfläche 28a, 28b, 30a der Gerinnenegativform 24 anliegen. Spätestens zu diesem Zeitpunkt oder zu einem früheren Zeitpunkt (wenn die Positioniervorsprünge 50 nur teilweise in die Gerinnenegativform 24 eingedrungen sind) ist der Aussparkern 18 provisorisch an der Gerinnenegativform 24 angebracht oder angeheftet, wobei der äußere Randabschnitt 58 der Positionierplatte einen Halteabschnitt für den Aussparkern 18 bildet, so dass er nicht mehr gehalten werden muss. Der Aussparkern 18 ist jedoch noch nicht so stabil mit der Gerinnenegativform 24 verbunden, dass er dem Druck des einzufüllenden Betons mit der gewünschten Zuverlässigkeit standhalten würde.

Zur endgültigen Befestigung des Aussparkerns 18 wird im nächsten Schritt die Befestigungsschraube 38 vorgeschoben und in Kontakt mit der Seitenfläche 28a, 28b, 30a der Gerinnenegativform 24 gebracht. Anschließend wird die Betätigungsschraube 38 in das Material der Gerinnenegativform 24 eingedreht, wobei die Drehbewegung durch ein an dem Werkzeugeingriffsabschnitt 34 angreifendes Drehwerkzeug, beispielsweise Schrauber, bewirkt wird. Das Gewinde 40 der Befestigungsschraube 38 erlangt dann Griff im Material der Gerinnenegativform 24 und zieht bei weiterer Drehung die Befestigungsschraube 38 weiter zu der Gerinnenegativform 24 hin bzw. in diese hinein.

Beim Eindrehen der Befestigungsschraube 38 gelangt schließlich der Schraubenkopf 42 in Anlage an einer der Gerinnenegativform 24 abgewandten Stirnfläche 78 der Hülse 62. Wird die Drehung der Befestigungsschraube 38 fortgesetzt, so nimmt der Schraubenkopf 42 dann die Hülse 62 in Richtung zu der Gerinnenegativform 24 hin mit. Dabei verschiebt die Hülse 62 einerseits über ihre Stirnfläche 70 die Positionierplatte 46 weiter zu der Gerinnenegativform 24 hin, so dass die Positioniervorsprünge 50 noch tiefer in das Material der Gerinnenegativform 24 eingedrückt werden. Gleichzeitig wird über den Außenflansch 66 und die Stufe 68 der Aussparkern 18 mitgenommen und fest gegen die Gerinnenegativform 24 gepresst.

Anschließend kann der Formmantel 14 an die innere Negativform 16 angesetzt werden bzw. der Formmantel 14 kann geschlossen werden. Schließlich kann Beton eingefüllt werden und ein Schachtbodenteil 12 in der Form 10 geformt werden.

Nach zumindest teilweisem Aushärten des Betons kann das Schachtbodenteil 12 entschalt werden. Dazu kann zunächst der Formmantel 14 geöffnet und abgehoben werden. Anschließend sind die Aussparkerne 18 und die Gerinnenegativform 24 von dem Schachtbodenteil 12 abzuziehen. Dazu wird zunächst die Befestigungsschraube 38 wieder aus der Gerinnenegativform 24 herausgedreht und zusammen mit der Hülse 62 aus der Durchgangsöffnung 36 herausgezogen.

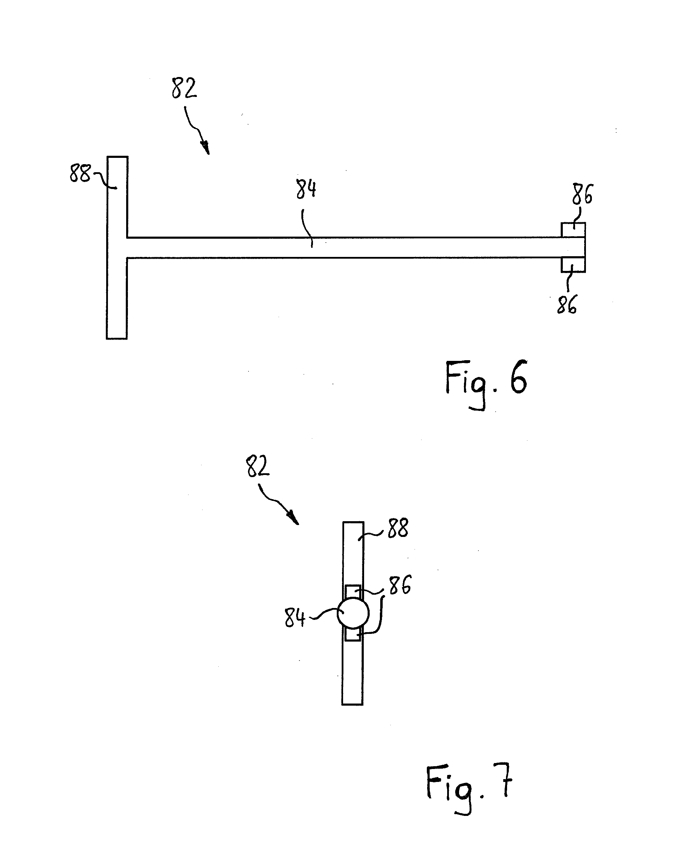

Anschließend kann ein in Figuren 6 und 7 dargestelltes Ziehwerkzeug 82 in die Durchgangsöffnung 36 eingeführt werden, um die Positionierplatte 46 zurückzuziehen. Das Ziehwerkzeug 82 kann einen Schaft 84 aufweisen, an dessen vorderem Ende zwei diametral gegenüberliegende radiale Vorsprünge 86 angeordnet sind und an dessen hinterem Ende ein Handhabungsabschnitt 88 angeordnet ist, der ein manuelles oder maschinelles Drehen sowie Ziehen des Ziehwerkzeugs 82 erlaubt. Das Ziehwerkzeug 82 wird so weit durch die Durchgangsöffnung 36 hindurchgesteckt, bis die radialen Vorsprünge 86 durch die Aussparungen 74 der zentralen Durchgangsöffnung 48 der Positionierplatte 46 hindurchtreten. Anschließend wird das Ziehwerkzeug um die Achse des Schafts 84 etwa um 90° gedreht, so dass die radialen Vorsprünge 86 den Rand der zentralen Durchgangsöffnung 48 hintergreifen. Die Abstandshalter 51 gewährleisten dabei, dass die Positionierplatte 46 auch nach dem vollständigen Eindrücken der Positioniervorsprünge 50 in die Gerinnenegativform 24 in einem solchen Abstand von der Seitenfläche 28a, 28b, 30a der Gerinnenegativform 24 bleibt, dass die radialen Vorsprünge 86 des Ziehwerkzeugs 82 die Positionierplatte 46 hintergreifen können, d.h. in dem Zwischenraum zwischen Positionierplatte 46 und Seitenfläche 28a, 28b, 30a der Gerinnenegativform 24 angeordnet werden können.

Durch eine Zugbewegung des Ziehwerkzeugs 82 wird dann die Positionierplatte 46 in eine Richtung von der Gerinnenegativform 24 weg mitgenommen, so dass die Positioniervorsprünge 50 aus der Gerinnenegativform 24 herausgezogen werden. Eine weitere Zugbewegung des Ziehwerkzeugs 82 verschiebt die Positionierplatte 46 bis zu der Stufe 60 zwischen Aussparung 54 und innerem Abschnitt 56 der Durchgangsöffnung 36, so dass die Positionierplatte 46 schließlich an dem Aussparkern 18 anliegt. Eine auf das Ziehwerkzeug 82 in Zugrichtung ausgeübte Kraft kann dann unmittelbar auf den Aussparkern 18 übertragen werden, um den Aussparkern 18 von der Gerinnenegativform 24 weg und insbesondere aus dem Schachtbodenteil 12 herauszuziehen. Durch die relativ große umlaufende Fläche des äußeren Randabschnitts 58 der Positionierplatte 46 und der umlaufenden Stufe 60 kann dabei auch eine hohe Zugkraft zuverlässig in den Aussparkern 18 eingeleitet werden, ohne den Aussparkern 18 zu beschädigen oder gar zu zerstören. Der entschalte Aussparkern 18 kann dann auch mehrmals wiederverwendet werden.

Nach dem Entschalen des Aussparkerns 18 kann das Ziehwerkzeug 82 um die Achse des Schafts 84 wieder so gedreht werden, dass die radialen Vorsprünge 86 mit den Aussparungen 74 der zentralen Durchgangsöffnung 48 fluchten, so dass das Ziehwerkzeug 82 wieder aus der Positionierplatte 46 und aus der Durchgangsöffnung 36 zurückgezogen werden kann. Gewünschtenfalls kann anschließend noch die Positionierplatte 46 aus der Aussparung 54 entnommen werden.

## Patentansprüche

1. Vorrichtung (34) zum Verbinden zweier Teile (18, 24) einer Negativform zur Herstellung von Schachtbodenteilen (12) aus Beton, umfassend:
- ein Positionierelement (46) mit einem Halteabschnitt (58), welcher dazu ausgebildet ist, ein erstes Teil (18) der Negativform an dem Positionierelement (46) zu halten, und mit einem Positioniervorsprung (50), welcher dazu ausgebildet ist, in ein zweites Teil (24) der Negativform eingedrückt zu werden, um das Positionierelement (46) und das erste Teil (18) der Negativform provisorisch an dem zweiten Teil (24) der Negativform zu halten,
**gekennzeichnet durch**
- eine Befestigungsschraube (38), welche dazu ausgebildet ist, am ersten Teil (18) der Negativform anzugreifen und in das zweite Teil (24) der Negativform eingeschraubt zu werden, um das erste Teil (18) gegen das zweite Teil (24) zu pressen und an diesem zu befestigen,
wobei
die Befestigungsschraube (38) **durch** eine Hülse (62) geführt und in Eingriff mit der Hülse (62) gebracht oder bringbar ist,
dass die Hülse (62) in Eingriff mit dem Positionierelement (46) gebracht oder bringbar ist, und
dass die Hülse (62) einen Anschlag (70) zur Anlage an einem Anschlag (48) des Positionierelements (46) aufweist, um das Positionierelement (46) bei einer Bewegung zum zweiten Teil (24) der Negativform hin mitzunehmen.

2. Vorrichtung (34) nach Anspruch 1, **dadurch gekennzeichnet, dass** das Positionierelement (48) dazu ausgebildet ist, verschiebbar an dem ersten (18) Teil der Negativform gehalten zu werden, so dass es zu dem zweiten Teil (24) der Negativform hin oder von diesem weg bewegbar ist.

3. Vorrichtung (34) nach Anspruch 1 oder Anspruch 2, **dadurch gekennzeichnet, dass** die Befestigungsschraube (38) direkt oder indirekt kraftübertragend mit dem Positionierelement (46) in Verbindung steht.

4. Vorrichtung (34) nach Anspruch 1, **dadurch gekennzeichnet, dass** die Befestigungsschraube (38) einen Anschlag (42) zur Anlage an einem Anschlag (78) der Hülse (62) aufweist, um die Hülse (62) bei einer Bewegung zum zweiten Teil (24) der Negativform hin mitzunehmen.

5. Vorrichtung (34) nach Anspruch 1 oder Anspruch 4, **dadurch gekennzeichnet, dass** die Hülse (62) einen Anschlag (66), insbesondere in Form eines Außenflansches aufweist, welcher dazu ausgebildet ist, an einem Anschlag (68) des ersten Teils (18) der Negativform anzuliegen, um das erste Teil (18) der Negativform bei einer Bewegung zum zweiten Teil (24) der Negativform hin mitzunehmen.

6. Vorrichtung (34) nach einem der vorhergehenden Ansprüche, **dadurch gekennzeichnet, dass** das Positionierelement (46) einen Anschlag (58) aufweist, welcher dazu ausgebildet ist, an einem Anschlag (60) des ersten Teils (18) der Negativform anzuliegen, um das erste Teil (18) der Negativform von dem zweiten Teil (24) der Negativform oder von einem Schachtbodenteil (12) abzuziehen.

7. Vorrichtung (34) nach Anspruch 6, **dadurch gekennzeichnet, dass** das Positionierelement (46) ein Kopplungsmittel (48) zur Kopplung mit einem Ziehwerkzeug (82) aufweist, um das Positionierelement (46) in einer Richtung von dem zweiten Teil (24) der Negativform weg zu ziehen.

8. Vorrichtung (34) nach Anspruch 7, **dadurch gekennzeichnet, dass** das Kopplungsmittel (48) ein Bayonett-Kopplungsmittel ist.

9. Vorrichtung (34) einem der vorhergehenden Ansprüche, **dadurch gekennzeichnet, dass** das Positionierelement (46) im Wesentlichen durch eine mit dem Positioniervorsprung (50) versehene Platte gebildet ist.

10. Negativform zur Herstellung von Schachtbodenteilen (12) aus Beton, umfassend ein erstes Teil (18), ein zweites Teil (24) und eine Vorrichtung (34) gemäß einem der vorhergehenden Ansprüche zum Verbinden des ersten Teils (18) mit dem zweiten Teil (24), wobei das erste Teil (18) eine Durchgangsöffnung (36) aufweist, durch welche die Befestigungsschraube (38) hindurchgeführt oder hindurchführbar ist.

11. Negativform nach Anspruch 10, **dadurch gekennzeichnet, dass** die Durchgangsöffnung (36) an einem dem zweiten Teil (24) zugewandten Ende (54) radial erweitert ist, wobei das Positionierelement (46) in das radial erweiterte Ende (54) passend eingesetzt ist, so dass es nicht durch die Durchgangsöffnung (36) hindurchtreten kann.

12. Negativform nach Anspruch 10 oder Anspruch 11, **dadurch gekennzeichnet, dass** das erste Teil (18) ein Aussparkern ist, welcher eine Ein- oder Auslassöffnung des Schachtbodenteils (12) abbildet, und das zweite Teil (24) eine Gerinnenegativform ist, welche eine Gerinnestruktur des Schachtbodenteils (12) abbildet.

13. Verfahren zum Herstellen von Schachtbodenteilen (12) aus Beton, umfassend die folgenden Schritte:
Bereitstellen eines ersten Teils (18) einer Negativform mit einer Durchgangsöffnung (36),
Einsetzen eines einen Positioniervorsprung (50) aufweisenden Positionierelements (46) in die Durchgangsöffnung (36),
provisorisches Anbringen des ersten Teils (18) der Negativform an einem zweiten Teil (24) der Negativform durch Eindrücken des Positioniervorsprungs (50) in das zweite Teil (24) der Negativform,
Einführen einer Befestigungsschraube (38) in die Durchgangsöffnung (36),
Einschrauben der Befestigungsschraube (38) in das zweite Teil (24) der Negativform, um das erste Teil (18) gegen das zweite Teil (24) zu pressen und an diesem zu befestigen, und
Formen eines Schachtbodenteils (12) an der Negativform.

14. Verfahren nach Anspruch 13, **dadurch gekennzeichnet, dass** das Verfahren ferner einen Schritt des Entschalens des Schachtbodenteils (12) umfasst, wobei von einem Werkzeug (82) eine Kraft auf das Positionierelement (46) übertragen wird und wobei das Positionierelement (46) diese Kraft auf das erste Teil (18) der Negativform überträgt, um das erste Teil (18) der Negativform von dem zweiten Teil (24) der Negativform bzw. von dem Schachtbodenteil (12) zu trennen.

## Claims

1. Device (34) for connecting two parts (18, 24) of a negative mould for producing shaft bottom parts (12) from concrete, comprising:
- a positioning element (46) comprising a holding portion (58) which is designed to hold a first part (18) of the negative mould on the positioning element (46), and comprising a positioning projection (50) which is designed to be pressed into a second part (24) of the negative mould in order to provisionally hold the positioning element (46) and the first part (18) of the negative mould on the second part (24) of the negative mould, **characterised by**
- a fixing screw (38) which is designed to engage with the first part (18) of the negative mould and to be screwed into the second part (24) of the negative mould, in order to press the first part (18) against the second part (24) and to fix it thereto,
the fixing screw (38) being passed through a sleeve (62) and being brought into engagement or being able to be brought into engagement with the sleeve (62), the sleeve (62) being brought into engagement or being able to be brought into engagement with the positioning element (46), and the sleeve (62) comprising a stop (70) for coming to rest on a stop (48) of the positioning element (46), in order to carry along the positioning element (46) when moving towards the second part (24) of the negative mould.

2. Device (34) according to claim 1, **characterised in that** the positioning element (48) is designed to be held movably on the first part (18) of the negative mould so that it can be moved towards or away from the second part (24) of the negative mould.

3. Device (34) according to either claim 1 or claim 2, **characterised in that** the fixing screw (38) is connected to the positioning element (46) directly or indirectly in a force-transmitting manner.

4. Device (34) according to claim 1, **characterised in that** the fixing screw (38) comprises a stop (42) for coming to rest on a stop (78) of the sleeve (62), in order to carry along the sleeve (62) when moving towards the second part (24) of the negative mould.

5. Device (34) according to either claim 1 or claim 4, **characterised in that** the sleeve (62) comprises a stop (66), in particular in the form of an outer flange, which is designed to come to rest on a stop (68) of the first part (18) of the negative mould in order to carry along the first part (18) of the negative mould when moving towards the second part (24) of the negative mould.

6. Device (34) according to any of the preceding claims, **characterised in that** the positioning element (46) comprises a stop (58) which is designed to come to rest on a stop (60) of the first part (18) of the negative mould, in order to remove the first part (18) of the negative mould from the second part (24) of the negative mould or from a shaft bottom part (12).

7. Device (34) according to claim 6, **characterised in that** the positioning element (46) comprises a coupling means (48) for coupling with a pulling tool (82), in order to pull the positioning element (46) in a direction away from the second part (24) of the negative mould.

8. Device (34) according to claim 7, **characterised in that** the coupling means (48) is a bayonet coupling means.

9. Device (34) according to any of the preceding claims, **characterised in that** the positioning element (46) is substantially formed by a plate equipped with the positioning projection (50).

10. Negative mould for producing shaft bottom parts (12) from concrete, comprising a first part (18), a second part (24) and a device (34) according to any of the preceding claims for connecting the first part (18) to the second part (24), wherein the first part (18) comprises a through-opening (36), through which the fixing screw (38) is or can be passed.

11. Negative mould according to claim 10, **characterised in that** the through-opening is widened radially (36) at an end (54) facing the second part (24), the positioning element (46) being inserted in a fitted manner into the radially widened end (54) so that it cannot pass right through the through-opening (36).

12. Negative mould according to either claim 10 or claim 11, **characterised in that** the first part (18) is a recess core which reproduces an inlet or outlet opening in the shaft bottom part (12), and the second part (24) is a negative channel mould which reproduces a channel structure of the shaft bottom part (12).

13. Method for producing shaft bottom parts (12) from concrete, comprising the following steps of:
- providing a first part (18) of a negative mould with a through-opening (36),
- inserting a positioning element (46) comprising a positioning projection (50) into the through-opening (36),
- provisionally attaching the first part (18) of the negative mould to a second part (24) of the negative mould by pressing the positioning projection (50) into the second part (24) of the negative mould,
- introducing a fixing screw (38) into the through-opening (36),
- screwing the fixing screw (38) into the second part (24) of the negative mould, in order to press the first part (18) against the second part (24) and fix it thereto, and
- moulding a shaft bottom part (12) on the negative mould.

14. Method according to claim 13, **characterised in that** the method further comprises a step of demoulding the shaft bottom part (12), a force being transmitted to the positioning element (46) by a tool (82), and the positioning element (46) transmitting said force to the first part (18) of the negative mould, in order to separate the first part (18) of the negative mould from the second part (24) of the negative mould or from the shaft bottom part (12).

## Revendications

1. Dispositif (34) pour relier deux parties (18, 24) d'un moule négatif pour produire des parties de fond de puits (12) en béton, comprenant:
- un élément de positionnement (46) avec une partie de maintien (58), qui est configurée pour maintenir une première partie (18) du moule négatif sur l'élément de positionnement (46), et avec une saillie de positionnement (50), qui est configurée pour être enfoncée dans une deuxième partie (24) du moule négatif, afin de maintenir l'élément de positionnement (46) et la première partie (18) du moule négatif provisoirement sur la deuxième partie (24) du moule négatif,
**caractérisé par**
- une vis de fixation (38), qui est configurée pour s'agripper à la première partie (18) du moule négatif et pour être vissée dans la deuxième partie (24) du moule négatif, afin de presser la première partie (18) contre la deuxième partie (24) et de la fixer à celle-ci,
dans lequel
- la vis de fixation (38) est guidée à travers une douille (62) et est ou peut être mise en prise avec la douille (62)
- la douille (62) est ou peut être mise en prise avec l'élément de positionnement (46), et
- la douille (62) présente une butée (70) à appliquer sur une butée (48) de l'élément de positionnement (46), afin d'entraîner l'élément de positionnement (46) lors d'un mouvement vers la deuxième partie (24) du moule négatif.

2. Dispositif (34) selon la revendication 1, **caractérisé en ce que** l'élément de positionnement (48) est configuré de façon à être maintenu de façon coulissante sur la première partie (18) du moule négatif, de telle manière qu'il soit déplaçable vers la deuxième partie (24) du moule négatif ou à partir de celle-ci.

3. Dispositif (34) selon la revendication 1 ou la revendication 2, **caractérisé en ce que** la vis de fixation (38) se trouve directement ou indirectement en liaison de transmission de force avec l'élément de positionnement (46).

4. Dispositif (34) selon la revendication 1, **caractérisé en ce que** la vis de fixation (38) présente une butée (42) à appliquer sur une butée (78) de la douille (62), afin d'entraîner la douille (62) lors d'un mouvement vers la deuxième partie (24) du moule négatif.

5. Dispositif (34) selon la revendication 1 ou la revendication 4, **caractérisé en ce que** la douille (62) présente une butée (66), en particulier en forme de bride extérieure, qui est configurée de façon à s'appliquer sur une butée (68) de la première partie (18) du moule négatif, afin d'entraîner la première partie (18) du moule négatif lors d'un mouvement vers la deuxième partie (24) du moule négatif.

6. Dispositif (34) selon l'une quelconque des revendications précédentes, **caractérisé en ce que** l'élément de positionnement (46) présente une butée (58), qui est configurée de façon à s'appliquer sur une butée (60) de la première partie (18) du moule négatif, afin d'écarter la première partie (18) du moule négatif de la deuxième partie (24) du moule négatif ou d'une partie de fond de puits (12).

7. Dispositif (34) selon la revendication 6, **caractérisé en ce que** l'élément de positionnement (46) présente un moyen de couplage (48) pour le couplage avec un outil d'extraction (82), afin de retirer l'élément de positionnement (46) dans une direction s'écartant de la deuxième partie (24) du moule négatif.

8. Dispositif (34) selon la revendication 7, **caractérisé en ce que** le moyen de couplage (48) est un moyen de couplage à baïonnette.

9. Dispositif (34) selon l'une quelconque des revendications précédentes, **caractérisé en ce que** l'élément de positionnement (46) est formé essentiellement par une plaque munie d'une saillie de positionnement (50).

10. Moule négatif pour produire des parties de fond de puits (12) en béton, comprenant une première partie (18), un deuxième partie (24) et un dispositif (34) selon l'une quelconque des revendications précédentes pour relier la première partie (18) à la deuxième partie (24), dans lequel la première partie (18) présente une ouverture de passage (36) à travers laquelle la vis de fixation (38) est ou peut être menée.

11. Moule négatif selon la revendication 10, **caractérisé en ce que** l'ouverture de passage (36) est élargie radialement à une extrémité (54) tournée vers la deuxième partie (24), dans lequel l'élément de positionnement (46) est introduit de façon adéquate dans l'extrémité radialement élargie (54), de telle manière qu'il ne puisse pas passer à travers l'ouverture de passage (36).

12. Moule négatif selon la revendication 10 ou la revendication 11, **caractérisé en ce que** la première partie (18) est un noyau évidé, qui forme une ouverture d'entrée ou de sortie de la partie de fond de puits (12), et la deuxième partie (24) est une forme négative de rigole, qui forme une structure de rigole de la partie de fond de puits (12).

13. Procédé pour produire des parties de fond de puits (12) en béton, comprenant les étapes suivantes:
- préparer une première partie (18) d'un moule négatif avec une ouverture de passage (36),
- insérer un élément de positionnement (46) présentant une première saillie de positionnement (50) dans l'ouverture de passage (36),
- poser provisoirement la première partie (18) du moule négatif sur une deuxième partie (24) du moule négatif par enfoncement de la saillie de positionnement (50) dans la deuxième partie (24) du moule négatif,
- introduire une vis de fixation (38) dans l'ouverture de passage (36), visser la vis de fixation (38) dans la deuxième partie (24) du moule négatif, afin de presser la première partie (18) contre la deuxième partie (24) et de la fixer à celle-ci, et
- mouler une partie de fond de puits (12) sur le moule négatif.

14. Procédé selon la revendication 13, **caractérisé en ce que** le procédé comprend en outre une étape de décoffrage de la partie de fond de puits (12), dans lequel on transmet une force à l'élément de positionnement (46) au moyen d'un outil (82), et dans lequel l'élément de positionnement (46) transmet cette force à la première partie (18) du moule négatif, afin de séparer la première partie (18) du moule négatif de la deuxième partie (24) du moule négatif ou de la partie de fond de puits (12).
